# EUROPÄISCHE PATENTSCHRIFT

(11) **EP 3 093 156 B1**
(45) Veröffentlichungstag und Bekanntmachung des Hinweises auf die Patenterteilung: **30.08.2017**
(21) Anmeldenummer: 15167427.2
(22) Anmeldetag: 12.05.2015
(51) Int. Cl.: B42D 25/41, B42D 25/369, B42D 25/29, B42D 25/24, B42D 25/23, G06K 19/06

(54) **DATENTRÄGER MIT PERSONALISIERBAREM MAGNETISCHEN ECHTHEITSMERKMAL UND VERFAHREN ZUM BESCHREIBEN EINES SOLCHEN DATENTRÄGERS**
DATA CARRIER WITH MAGNETIC PERSONALISABLE AUTHENTICITY FEATURE AND METHOD FOR INSCRIBING OF SUCH A DATA CARRIER
SUPPORT DE DONNÉES AYANT UNE CARACTÉRISTIQUE MAGNÉTIQUE D'AUTHENTICITÉ PERSONNALISABLE ET PROCÉDÉ D'ÉCRITURE DE SUPPORTS DE DONNÉES

(43) Veröffentlichungstag der Anmeldung: 16.11.2016
(73) Patentinhaber: U-NICA Technology AG, 7208 Malans (CH)
(72) Erfinder: FRANKEN, Klaus, 7206 Igis (CH)
(74) Vertreter: Liebetanz, Michael

(56) Entgegenhaltungen:
- EP-A1- 1 511 012
- WO-A1-02/26507
- DE-A1-102011 116 490
- DE-A1-102011 116 491
- DE-A1-102013 005 839

## Beschreibung

### TECHNISCHES GEBIET

Die vorliegende Erfindung betrifft einen Datenträger, insbesondere eine Kunststoffkarte, mit einem in dem Datenträger vorgesehenen magnetischen Echtheitsmerkmal, das bei Bestrahlung mit einem energiereichen Strahl, z.B. einem Laserstrahl oder einem Elektronen- oder Neutronenstrahl, durch Veränderung von physikalischen und/oder chemischen Eigenschaften personalisierbar ist.

### STAND DER TECHNIK

Datenträger in Form von Ausweiskarten, Personalisierungsseiten bzw. -inlays für Pässe oder auch Kreditkarten und ähnliche Kunststoffkarten müssen heute eine hohe Fälschungssicherheit aufweisen. Es gibt eine Vielzahl von unterschiedlichsten Sicherheitsmerkmalen sowie spezielle Druckverfahren, welche eine derartige Fälschungssicherheit in einem gewissen Umfang gewährleisten können. Eine große Herausforderung ist es dabei, nicht nur nicht individualisierte Sicherheitsmerkmale bereitzustellen, sondern insbesondere Sicherheitsmerkmale, welche gewissermassen mit der Personalisierung kombiniert sind respektive Teil davon sind, also individualisierbar sind. Die leichte Verfügbarkeit von Laseranlagen und ihre ausgedehnten Anwendungsgebiete im Rahmen der Dokumentsicherheit legen deren Anwendung für ein sicheres Personalisierungsverfahren nahe. Die im Gebrauch vorhandene Lasertechnologie wird in der Praxis ausschliesslich für die Erzeugung von Bildern wie etwa Portraits und grafischen Symbolen, Schriften und dergleichen eingesetzt.

Aus der DE 2907004 A ist z.B. bekannt, dass Bilder in Ausweiskarten, aber natürlich auch andere visuell erkennbare Informationen wie Zeichen, Muster etc., mit einem Laserstrahl erzeugt werden können. In dieser Schrift besteht die Funktionsschicht, aus der im Verlauf des Verfahrens das endgültige Bild oder ein beliebiges sichtbares Symbol oder Zeichen erzeugt wird, aus einer thermosensitiven Schicht. Diese Funktionsschicht erstreckt sich über die Karte auf einem Flächensegment, auf dem sich später das Bild oder eine andere visuell erkennbare Information befinden soll. Die Funktionsschicht befindet sich üblicherweise im Verbund mit anderen Kunststoffschichten, aus denen im Verlauf der Kartenherstellung die fertige Karte als Folienlaminat erzeugt wird. Das Bild wird in diesem Fall eingebrannt, wobei mit der Intensität des Laserstrahls eine Verdunkelung der bestrahlten Stelle einhergeht. Auf diese Weise werden heute routinemässig schwarz-weisse Bilder bzw. Graustufenbilder erzeugt. Der bereits früh erkannte Vorteil dieses Verfahren, auch als Laser-Engravings bezeichnet, besteht in der hohen Fälschungssicherheit und Beständigkeit gegen Licht und mechanischer Beanspruchung von auf diese Weise hergestellten Karten, insbesondere dann, wenn sie aus Polycarbonat bestehen.

Dies ist zum Beispiel durch die EP 1 574 359 A oder die EP 1 008 459 A belegt. Sicherheitsdokumente hergestellt mit Hilfe von Laser-Engraving auf Polycarbonatlaminaten erfüllen internationale Vorgaben für Reisedokumente (ICAO Doc. 9303 Part III Volume I) oder übertreffen diese sogar. Für eine farbige Darstellung werden mittlerweile auch Systeme bestehend aus Lasern mit drei unterschiedlichen Wellenlängen eingesetzt. Voraussetzung ist eine Funktionsschicht im Datenträger, die aus einer Formulierung mit farbgebenden Komponenten besteht. Die farbgebenden Komponenten verschiedener Farbe müssen zusammen einen Farbraum ergeben, der aus mehreren, typischerweise wenigstens drei, Grundfarben besteht. Aus praktischen Gründen werden die Grundfarben Cyan [C], Magenta [M] und Gelb [Y] bevorzugt. Es sind jedoch auch andere Farben denkbar. Die Grundfarben müssen ausserdem ein Absorptionsspektrum aufweisen, das eine Wechselwirkung mit farbigem Laserlicht erlaubt. Im Gegensatz zum vorgenannten Verfahren der Verkohlung von zunächst nicht sichtbaren Komponenten zeigt dieses Verfahren die Farbgebung durch ein Bleichen, also ein Aufhellen, einer vor der Bestrahlung sichtbaren Farbe. Das Substrat erscheint durch die sichtbare Mischung der farbigen Komponenten vor der Bestrahlung in einem sehr dunklen, idealerweise schwarzen Ton.

Ein solches Verfahren beschreibt zum Beispiel die WO 01/15910 A. Die Vorteile der weiter erhöhten Fälschungssicherheit durch eine farbliche Darstellung des Dokumenteninhabers werden bei dem in diesem Dokument beschriebenen Verfahren und den dadurch hergestellten Produkten durch Nachteile aufgewogen, die seinen praktischen Wert einschränken. Die Autoren beschreiben, wie mit einer Laserstrahlung bestimmter Wellenlänge Farbkörper, Farbstoffe oder Pigmente mit bestimmtem Absorptionsspektrum dergestalt gebleicht werden, dass die komplementären Farben bestehen bleiben. Das Verfahren ist mithin technisch sehr aufwendig und zielt im Wesentlichen wie das schwarzweiss Bilder erzeugende Laser-Engraving auf eine fälschungssichere Darstellung von fotografischen Bildern ab.

Ein anderes Laser-Verfahren, das fälschungssichere Farbbilder über den Weg der Desaktivierung von lichtsensitiven Farbstoffen erzeugen vermag, wird in der WO 2012/062505 A vorgeschlagen. Es zeichnet sich durch die pigmentweise Wirkung eines einzigen energiereichen Lasers aus, der die Pigmentschicht mit mikroskopischer Präzision jedes einzelne Pigmentkorn ausbleicht, nachdem dessen Position in einem vorherigen Verfahren fotometrisch ermittelt und auf dieser Basis eine Pigmentkarte angelegt wurde.

Wiederum ein anderer Ansatz (US 7,793,846 B) wird mit Lasersystemen verfolgt, die im nahen IR-Bereich arbeiten. In diesem Fall werden die Partikel mit den Farbkörpern in innigen Kontakt mit IR-Strahlung absorbierenden Substanzen gebracht, die sich ihrerseits durch die Absorption mit spezifischer Laserstrahlung aufheizen und die benachbarten Farbkörper thermisch zur Farbänderung veranlassen.

Die DE 10 2011 116 491 A1 offenbart einen Datenträger mit einem Mikrokapseln aufweisenden Sicherheitselement. Die Mikrokapsel umfasst eine Kapselhülle mit einem lichtdurchlässigen Trägermedium und eine Vielzahl von magnetischen, lichtundurchlässigen Pigmenten. Die Lichtdurchlässigkeit der Mikrokapsel ist durch Anlegen eines Magnetfeldes reversibel intensivierbar, da das Magnetfeld die magnetischen Pigmente derart ausrichtet, dass die Mikrokapsel bei der Betrachtung im Auflicht in der Farbe des Substratuntergrundes erscheint, und da in Abwesenheit des Magnetfelds sich die magnetischen Pigmente innerhalb der Mikrokapsel wieder derart statistisch verteilen, dass ein Betrachter die Mikrokapseln in der Eigenfarbe des magnetischen Pigments wahrnimmt. Die Kapselhülle kann mittels elektromagnetischer Strahlung beschädigt werden, wodurch die Trägerflüssigkeit aus den Mikrokapseln austritt und die Pigmente unbeweglich in den beschädigten Kapselhüllen zurückbleiben. Dadurch werden die Mikrokapseln irreversibel in einem lichtundurchlässigen Zustand fixiert.

Ein Verfahren zur Herstellung eines optisch variablen Sicherheitselements mit einer mikrokapselbasierten Farbschicht mit einem Motivbereich ist in der DE 10 2011 116 490 offenbart. Dabei wird eine Druckfarbe bereitgestellt, die eine Vielzahl von Mikrokapseln enthält, in deren Kapselhülle eine Trägerflüssigkeit und ein magnetisch reversibel ausrichtbares Pigment eingeschlossen sind. In einem den Motivbereich enthaltenden Teilbereich der Farbschicht wird ein externes Magnetfeld angelegt, um dort die drehbaren Pigmente in den Mikrokapseln auszurichten. Die Kapselhüllen im Motivbereich werden durch elektromagnetische Strahlung beschädigt, so dass die Trägerflüssigkeit aus den Mikrokapseln austritt und die Pigmente unbeweglich in den beschädigten Kapselhüllen zurückbleiben und somit das Motiv des Sicherheitselements darstellen.

Allen vorgenannten Verfahren liegt die Motivation zugrunde, ein sichtbares Sicherheitsmerkmal zu erzeugen. Auf dem technischen Gebiet der Dokumentsicherheit definiert man jedoch mehrere Sicherheitsebenen, von denen die sichtbaren und andere von menschlichen Sinnen erfassbaren Merkmale als Erststufen (auch First-Level-Merkmale genannt) nur eine von drei Sicherheitsebenen darstellen. Die zweite Sicherheitsstufe subsummiert Merkmale, die mit einfachen technischen Mitteln, d. h. mit kleineren, portablen Geräten nachweisbar sind. Im einfachsten Fall können das eine UV-Lampe oder ein Laserpointer sein. Die Drittstufenmerkmale sind komplexerer Natur und sind mit forensischen Mitteln verifizierbar. Die verschiedenen Sicherheitsebenen dienen zur Abrundung der gesamten Dokumentensicherheit.

Um diesem Bedürfnis Rechnung zu tragen, schlägt die EP 1 322 478 B1 die Erzeugung eines im UV-Licht erkennbaren Merkmals vor das, basierend auf dem Laser-induzierten Bleichprozess, sich dem Betrachter als dunkle Ausschnitte auf einem fluoreszierenden Flächenelement zeigt. Das Laserlicht oder eine andere energiereich Strahlung, wie z. B. ein Elektronenstrahl, deaktiviert demnach ein lumineszierendes Echtheitsmerkmal an ausgewählten Stellen. Der sichtbare Bildeindruck entspricht dem eines Negativbildes oder einer Negativschrift. Dieses Merkmal erlaubt die Authentifizierung eines Sicherheitsdokumentes mit einfachen Mitteln wie einer UV-Lampe, hat jedoch dadurch einen begrenzten Wert, da man die UV-aktive Schicht auch überdrucken könnte und damit den visuellen Eindruck unter UV-Licht nachstellen könnte. Unter UV-aktiver Schicht ist im Zusammenhang mit dieser Erfindung eine solche Schicht zu verstehen, die unter Einstrahlung von UV-Licht eine Fluoreszenz zeigt. Diese Definition ist klar abzugrenzen von einer Schicht, die unter Einwirkung von UV-Licht polymerisiert bzw. aushärtet, was in der Terminologie der Drucktechnik bei den sogenannten UV-Farben der Fall ist. Eine Fälschung, die dadurch zustande kommt, dass eine UV-aktive Schicht überdruck statt fotochemisch deaktiviert wird, liesse sich zwar mikroskopisch nachweisen, was das Merkmal wiederum auf ein forensisches Niveau heben würde.

### DARSTELLUNG DER ERFINDUNG

Ein Vorteil des Verfahrens nach der EP 1 322 478 ist die Wirtschaftlichkeit in Bezug auf Handhabung, Zuverlässigkeit, Kosten. Die Erfinder haben erkannt, dass sich zudem die Möglichkeit bietet, die Laser-basierte Fluoreszenzlöschung mit anderen Personalisierungsverfahren beruhend auf einer Lasertechnologie zu kombinieren. In der Praxis werden Zweitstufenmerkmale dort gefordert, wo eine schnelle Authentifizierung des Dokumentes benötigt wird. Dies trifft typischerweise auf Grenzposten oder die Zutrittskontrolle zum Gate-Bereich eines Flughafens zu. Die Kombination ergänzender Merkmale hat sich an solchen Kontrollstellen als vorteilhaft erwiesen. Neben den Verfahren, die eine Authentifizierung unter Licht verschiedener Wellenlänge ermöglichen, haben sich Verfahren auf der Basis von magnetischen Merkmalen als Zweitstufenmerkmale bewährt. Seit langem werden Magnetstreifen für das Speichern von Datensätzen verwendet, wobei sich deren Nutzen über die Sicherheitsanwendung hinaus auf die Speicherung kleiner Datenmengen für kommerzielle Zwecke erstreckt, was z. B. auch bei Kundenkarten genutzt wird. Insbesondere für Sicherheitsanwendungen sind heute Verfahren etabliert, die auch eine magnetische Bilddarstellung erfassen können. Ein Motiv, z. B. ein Bild, eine Schrift oder ein Barcode, lässt sich leicht mit magnetischer Tinte auf dem Sicherheitsdokument aufbringen und so nachweisen. Ein magnetischer Sicherheitsfaden lässt sich zum Beispiel auch mit einem solchen Scan-Verfahren nachweisen. Magnetische Bilderfassungsgeräte werden zum Beispiel von Regula-Rus CJSC, Moskau, oder Matesy GmbH, Jena, angeboten. Je nach Ausführungsform der Nachweisgeräte sind die magnetischen Bilddarstellungsverfahren als Zweit- oder Drittstufen-Verfahren einsetzbar.

Dokumente zum Nachweis der Identität ihres Inhabers werden nicht nur auf die Echtheit des Dokumentes selbst hin überprüft, sondern besitzen überdies Merkmale, die für den Inhaber des Dokumentes kennzeichnend sind. Es muss demnach die latente Möglichkeit gegeben sein, das Dokument angepasst auf seinen Träger zu individualisieren. Das ist eine Forderung, die typischerweise mit einem Porträt erfüllt wird. Ein rein visueller Vergleich zwischen dem Konterfei des Trägers im Dokument und seinem Gesicht ist nur bedingt als sicher anzusehen. Biometrische Verfahren versprechen zwar eine zuverlässigere Identifikation, sind aber mit einem Aufwand verknüpft, der für die meisten Kontrollstellen nicht praktikabel ist. Hingegen stellen Zweitstufenmerkmale einen guten Kompromiss zwischen Manipulationssicherheit und Prüfungsaufwand dar.

Der simple Aufdruck personalisierter bzw. individualisierter Daten solcher Zweitstufenmerkmale auf die Oberfläche des ID-Dokumentes bzw. der ID-Karte wie beispielsweise ein Aufdruck mit magnetischer Tinte erfordert neben der Erzeugung des Porträts mit einem Laserverfahren ein zusätzliches Druckverfahren. Der Druck ist nicht nur ein zusätzlicher Aufwand, sondern ist überdies nachträglich auf der Karte leicht aufzubringen und gilt damit nicht als sicher. Magnetische Tinte ist überdies kein reines Zweitstufenmerkmal, da deren Aufdruck auch mit dem Auge erkennbar ist.

Es besteht insbesondere ein Bedarf nach einem Laserverfahren, das neben dem Bild - mit oder ohne digitales Wasserzeichen - auch ausserhalb des Bildes die Karte oder das Dokument in einer nicht sichtbaren oder sonst mit den Sinnen nicht wahrnehmbaren Weise zu personalisieren. Es besteht damit ein Bedarf nach Verfahren, die sowohl eine Bilddarstellung wie auch weitere nicht sichtbare Daten möglichst in einem Zug auf das Sicherheitsdokument aufbringen. Die EP 1 322 478 bietet ein Angebot für diesen Bedarf, löst die Aufgabe mit einem Zweitstufenmerkmal, das im UV-Licht erkennbar ist. UV-Merkmale sind jedoch wenig subtil. Für einen potentiellen Fälscher gehört es gewissermassen zur Routine, in einem Dokument UV-Merkmale aufzuspüren, um sie sodann nachzustellen. Das in der EP 1 322 478 beanspruchte Merkmal ist stellt eine negative Schrift dar, die naturgemäss einen Hintergrund hat, von dem sie sich abheben kann. Dies ist im Hinblick auf die Freiheit des Layouts der Karte bzw. des Dokumentes nicht immer wünschenswert.

Es ist daher eine Aufgabe der vorliegenden Erfindung, ausgehend von der EP 1 322 478 B1 eine Personalisierung mit höherer Verlässlichkeit und der Möglichkeit der späteren Verifikation dieser Personalisierung zu schaffen, welche sowohl wirtschaftlich und schnell durchführbar ist sowie eine höher Komplexität als ein UV-Merkmal aufweist, trotzdem mit vergleichsweise gängigen Mitteln verifizierbar ist und Freiheiten für das Layout möglichst nicht einschränkt.

Die Aufgabe wird dergestalt gelöst, dass einerseits ein Laser oder eine Kombination von Lasern für die Bildgestaltung und das Aufbringen weiterer individueller Daten mit allen Vorteilen nach dem Stand der Technik als Personalisierungsinstrument genügt und andererseits als weiteres personalisierbares Zweitstufenmerkmal ein magnetisches Merkmal und damit ein gegenüber einem Fluoreszenzmerkmal höherwertiges Merkmal verwendet wird. Das magnetische Merkmal kann ausserdem aktiv erzeugt werden, besteht im Gegensatz zum Verfahren gemäss EP 1 322 478 nicht aus einem Löschvorgang eines schon vorhandenen Merkmalsträger. Das magnetische Merkmal ist das Ergebnis eines opto-magnetischen Prozesses, der ein Schreiben von Informationen erlaubt. Für die Gestaltung des sichtbaren wie nicht visuell erkennbaren Layouts erlaubt das erfindungsgemässe Verfahren maximale Freiheiten. Das Laserverfahren bietet ausserdem den Vorteil, dass auf den mit Pigmenten und magnetisierbaren Stoffen vorbereiteten Datenträger auch durch transparente Deckschichten hindurch eine Personalisierung möglich ist, was den Fälschungsschutz höherwertiger macht.

Die Aufgabe wird durch die Vorrichtung mit den Merkmalen des Anspruchs 1 und das Verfahren mit den Merkmalen des Anspruchs 10 gelöst.

Die Lösung beinhaltet ja die von der Aufgabe verlangte Eigenschaft, den Magnetismus mit dem gleichen Werkzeug zu erschaffen wie das Bild, wobei das Werkzeug aufgabengemäss ein Energiestrahl sein kann.

Weitere Ausführungsformen sind in den abhängigen Ansprüchen angegeben.

Die Träger einer Magnetisierung, die für magnetische Sicherheitsmerkmale nach dem Stand der Technik herangezogen werden, sind im Gegensatz zu den meistens organischen Fluoreszenzfarbstoffen anorganischer Natur, z. B. Eisen, Kobalt, Nickel, Gadolinium und mit seltenen Erden dotierte Eisenmetalle, dotiertes Manganoxid, magnetische Perowskite, Eisen(II,III)-Oxid (Magnetit), SmO₅, Legierungen wie Heusler-Phasen etc., und können durch Einwirkung von elektromagnetischer Strahlung nicht photochemisch ihrer magnetischen Wirkung beraubt werden. Für diese Metallmagnete wird in der einschlägigen Natur auch die Bezeichnung atomare Magnete verwendet. Üblich ist beispielsweise magnetische Tinte auf der Basis von Magnetit mit einer Korngrösse zwischen 2 Nanometer und 20 Nanometer, um einem nicht-magnetischen Substrat wie Papier oder einem Polymer einen makroskopisch messbaren Magnetismus zu verleihen. Eine Entmagnetisierung dieser anorganischen Magnete ist zwar mit dem Anlegen eines Koerzitivfeldes möglich, was aber nicht bedeutet, dass der Ferromagnetismus des Substrates irreversibel verschwindet. Eine erneute Magnetisierung ist durch Anlegen eines entsprechenden Feldes jederzeit möglich.

Grundlage des Magnetismus als makroskopisches Phänomen ist die Wechselwirkung vieler Elektronen mit ungepaartem Spin, wobei eine minimale Anzahl von Elektronen mit gleichgerichtetem Spin erforderlich ist (kooperativer Effekt). Eine messbare Remanenz und damit ein Ferromagnetismus oder Ferrimagnetismus kann sich bei isolierten Radikalen oder zum Beispiel auch ungepaarten Elektronen einer einzelmolekularen Koordinationsverbindung nicht einstellen, sofern die Spin-Spin-Wechselwirkung zwischen den ungepaarten Elektronen nur klein oder gar nicht vorhanden ist. Der Übergang vom Paramagnetismus zum Ferro- oder Ferrimagnetismus setzt eine Spin-Spin-Kopplung voraus, die sich über eine genügend hohe Zahl von Elektronen erstreckt und eine genügend grosse räumliche Ausdehnung besitzt. Die quantenmechanischen Voraussetzungen verlangen unter anderem eine minimale Nähe zwischen den ungepaarten Elektronen mit gleichgerichtetem Spin. Da thermische Einflüsse einen unmittelbaren Einfluss auf die Fernwirkung der Spins der ungepaarten Elektronen haben, gibt es Grenztemperaturen, oberhalb derer keine ausreichende Kopplung und damit kein makroskopischer Magnetismus mehr besteht. Die entsprechenden Temperaturwerte, im Fall eines vorliegenden Ferromagnetismus als Curie-Temperaturen bezeichnet, sind spezifische Stoffkonstanten für jedes magnetische Material. Für praktische Anwendungen, insbesondere Anwendungen auf dem Gebiet der ID-Dokumente, sind nur Curie-Temperaturen oberhalb der Raumtemperatur sinnvoll. Für klassische magnetische Werkstoffe gelten Curie-Temperaturen (T_{c}) in einer verwertbaren Grössenordnung wie zum Beispiel bei Fe 768 °C, Co 1121 °C, Ni 360 °C, SmCo 750 °C, Fe₂O₃ 450 °C oder NdFeB 300 °C. Magneto-optische Speicherverfahren nutzen die Curie-Temperaturen, um durch Einwirkung eines Lasers an einem bestimmten Ort des Speichermediums das magnetische Grundmaterial über seine Curie-Temperatur zu erhitzen und somit die darauf befindliche Information zu löschen. Eine erneute Magnetisierung ist dazu geeignet, neue Datensätze auf dem gleichen Speichermedium abzulegen. Für die Erfüllung der Aufgabe sind diese klassischen Verfahren nicht geeignet.

Es werden also Datenträger jeglicher Art, insbesondere Kunststoffkarten, mit in dem Kartenverbund eingebrachten Echtheitsmerkmalen vorgegeben, die bei Bestrahlung mit einem energiereichen Strahl, z.B. einem Laserstrahl oder einem Elektronen- oder Neutronenstrahl, personalisierbar sind. Die personalisierbaren Echtheitsmerkmale bestehen aus mindestens einer aktivierbaren Komponente, die nach der Aktivierung mit einem Energiestrahl an der bestrahlten Stelle einen makroskopisch messbaren Magnetismus aufweist. Mithin muss die mindestens eine magnetisierbare Komponente überall dort auf den Datenträger aufgebracht oder in diesen eingebracht sein, wo bei der späteren Authentizierung des Dokuments eine magnetische Zeichenfolge (Buchstaben, Zahlen, Barcodes), ein magnetisches Bild oder eine sonstige magnetisch erfassbare Information erscheinen soll. Die magnetisch erfassbare Information kann jedwede digitale Information beinhalten, die entsprechend auslesbar ist.

Die erfindungsgemässen Echtheitsmerkmale können gemäss den weiter unten genauer ausgeführten Ausführungsformen an verschiedensten möglichen Einbindungen und Einbauorte in dem der Identifikation dienenden Datenträger vorgesehen werden und beansprucht. Die magnetisierbaren Echtheitsmerkmale können daher als Druckfarbe auf eine bestimmte oder mehrere Schichten des Datenträgers aufgedruckt oder in anderer Weise aufgebracht sein. Die Echtheitsmerkmale können aber auch in das Kunststoffpolymer einer oder mehreren Schichten des Datenträgers eingebunden sein. Die magnetisierbaren oder magnetischen Echtheitsmerkmale können auch in den Kleber, den Lack oder als Additiv in das Kunststoffmaterial eingebunden sein. Es ist auch denkbar, das erfindungsgemässe Merkmal als Sprayauftrag aufzubringen oder als Teil einer Laminationsfolie oder eines Dünnfilms in das Dokument einzubringen oder auf dieses aufzubringen.

Der Kartenverbund kann eine Deckschicht und eine Trägerschicht aufweisen, wobei die Deckschicht auf der der Bestrahlung zugewandten Seite des Datenträgers angeordnet sein kann, und welche gegenüber dem verwendeten Strahl transluzent ist.

Die in einer Ausführungsform beschriebene Schicht, welche hier als Schutzschicht bezeichnet wird, kann sich auf einem Substrat bzw. auf einem Datenträger beispielsweise aus einem Papier oder Polymer, z. B. Polycarbonat, befinden. Eine solche Schutzschicht kann die weiteren Schichten des Datenträgers welche die magnetischen oder magnetisierbaren Komponenten aufweisen, umgeben. Diese Schutzschichten können als Primer, als Schutz für das Substrat, z. B. in der Form von opaken Schichten gegen die Einwirkung von Laserlicht auf ein empfindliches Substrat, wie z. B. Papier, dienen oder grafische Funktionen tragen, z. B. unter Lasereinwirkung karbonisieren, also am Wirkungsort der Laserstrahlung schwarz werden, oder farbige Pigmente oder Farbstoffe beinhalten, die ihrerseits von Laserlicht gebleicht werden.

Die magnetisierbare Schicht kann sich vollflächig über den Datenträger erstrecken.

Die Aktivierung der magnetisierbaren bzw. magnetischen Komponente sowie die Erzeugung einer sichtbaren Schrift oder eines sichtbaren Bildes wie z. B. das Porträtbild des Dokumenteninhabers können durch eine Bestrahlung derselben Art erfolgen oder auch durch Bestrahlung mit verschiedenen Strahlarten oder Strahlquellen. Bei der Bestrahlung mit verschiedenen Strahlarten, können die Strahlquellen bleichzeitig aktiv sein oder nacheinander für die Personalisierung eingesetzt werden.

Die magnetische Substanz besitzt bevorzugt eine Curie-Temperatur oberhalb der Raumtemperatur.

Das magnetisierbare bzw. magnetische Merkmal besteht aus Molekülmagneten, die eine organische oder metallorganische Basis haben und zu hinreichend grossen ein- bis dreidimensionalen Strukturen organisiert sind, damit sich ein Ferro- oder Ferrimagnetismus ausbilden kann.

Die bekannten rein organischen Ferromagnete weisen Curie-Temperaturen nahe am absoluten Nullpunkt auf und kommen daher für eine praktische Verwertung nicht in Frage. Beispiele dafür sind das p-Nitrophenyl-nitronyl-nitroxid-Radikal T_{c} = 0.6 K, organisch dotierte Fullerensysteme, z. B. TDAE Tc = 16.1 K oder die β-Phase des Dithiadiazolyl-Radikals in p-NC.C₆F₄.CNSSN mit T_{c} = 35.5 K, wobei diese Moleküle nur in einer supramolekularen, räumlichen Anordnung der Molekularanordnung einen makroskopisch beobachtbaren Magnetismus aufweisen. Die rein organischen Molekülmagnete sind gegenwärtig Gegenstand eines sehr dynamischen Forschungsgebietes, das die mittelfristige Realisierung organischer Molekülmagnete mit Curie-Temperaturen bei Raumtemperatur oder höher verspricht. Nach derzeitigem Stand der Technik versprechen metallorganische Stoffe, insbesondere die Cyano-Komplexe, eine höhere Tauglichkeit im Sinne dieser Erfindung. Die Forschungsarbeiten auf dem Gebiet der organischen Magnete wurden mit dem Komplex V[(Cr(CN)₆]_{0.86}*2.8 H₂O mit einer Curie-Temperatur von 315 K angestossen. Typische Koerzitivfeldstärken liegen in der Grössenordnung von 1000 Oe bzw. 80 KA/m, was gut in den Arbeitsbereich käuflicher Geräte passt, die sich für Kontrollstellen zur visuellen Darstellung von Magnetfeldern eignen. Der Stand der Technik weist - wenn auch ungesichert - auf metallorganische Verbindungen hin, die Koerzitivfeldstärken weit darüber hinaus im Bereich des SmCo mit 17800 Oe liegen, welche damit schon deutlich über die Anforderungen dieser Erfindung bezüglich der Magnetisierbarkeit hinausgehen. Der ferrimagnetische Komplex V(TCNE)₂*0.5CH₂Cl₂ weist eine dem Chromdioxid vergleichbare molekulare Sättigungsmagnetisierung und Curie-Temperatur sowie eine mit 60 Oe für die Praxis ausreichende Koerzitivkraft auf. Gleichzeitig lässt das Tetracyanoethylen-Dimer-Anionradikal mit einer starken Absorptionsbande bei 533 bis 535 nm erwarten, dass eine die Anregung mit sichtbarem Licht, insbesondere Laserlicht, entsprechender Wellenlänge das π-Dimer und damit das Radikal destabilisiert. Die Empfindlichkeit des Komplexes an Luft und unter thermischer Belastung über 350 K relativiert seinen Nutzen als molekularer Magnet zwar, aber es zeigt sich damit, dass stabile Derivate oder verwandte Komplexverbindung in einer stabilisierenden Formulierung geeignete Kandidaten für molekulare Magnete sind.

Ein makroskopischer Ferro- oder Ferrimagnetismus, so wie er im erfinderischen Sinne nützlich ist, geht über eine molekulare magnetische Wechselwirkung hinaus. Die erfindungsgemässe Grundlage ist auf den Paramagnetismus metallorganischer Verbindungen zurückzuführen, der wiederum seine Ursache im Gesamtdrehimpuls des elektronischen Systems dieser Verbindungen hat. Für metallorganische Verbindungen bzw. Komplexen ist im Wesentlichen der Spin-only-Fall für eine molekulare magnetische Wechselwirkung von Bedeutung. Für alle folgenden Betrachtungen sind daher der Gesamtspin der beteiligten Metallionen und die Spinkopplung der elektronischen Systeme dieser Ionen relevant. Die mikroskopische Spinkopplung von Komplexmolekülen und Komplexclustern wiederum kann einen makroskopisch messbaren Magnetismus nur begründen, sofern eine weitreichende supramolekulare Kopplung des Spins eines Moleküls oder eines kleinen Molekülverbands stattfindet. Eine innerhalb eines Komplexes oder Komplexclusters auftretende ferromagnetische oder anti-ferromagnetische Kopplung bzw. Wechselwirkung ist daher begrifflich von dem makroskopisch messbaren Magnetismus zu unterscheiden. Einzelmolekülmagnete, auch single molecule magnets (SMM) genannt, können im Molekül oder einem begrenzten Molekülverband zwar ferromagnetische Spinkopplungen zwischen einer Anzahl von Metallzentren aufweisen, zeigen aber ohne eine weit reichende supramolekulare Fernwirkung keinen Ferromagnetismus. Als "magnetisierbar" kann man jeden diamagnetischen Komplex im LS-Zustand bezeichnen. Als "magnetisch" kann man dann den HS-Zustand des Moleküls bezeichnen. Die Laseranregung wäre damit wiederum als "Magnetisierung" zu verstehen. Shin-ichi Ohkoshi et al (nature Chemistry; July 20011, 564-569) haben beispielsweise einen Eisen-Niob-Komplex beschrieben, der nach einer LIESST-Anregung eine starke antiferromagnetische Wechselwirkung zwischen Eisen und Niob aufweist. Die Spinsysteme der Kerne werden damit gekoppelt, aber aufgrund der unterschiedlichen Spinmultiplizität beider Metallionen bleibt ein Ferrimagnetismus zurück.

Die Spinkopplung auf mikroskopischer Ebene kann direkt zwischen einem Metallion und einem nächsten Metallion eines mehrkernigen Komplexes auftreten (direkter Austausch) oder über Brückenliganden stattfinden (Superaustausch). Dabei können als Brückenliganden beispielsweise CN, N-Donorliganden oder auch Komplexeinheiten wie [Au(CN)₂]⁻ fungieren. Das Gold-Cyanido-Komplexion ist wiederum seinerseits in der Lage dreidimensionale Netzwerke aufzubauen, die eine makroskopische Kopplung begünstigen

Die Wechselwirkung der Spins in benachbarten Orbitalen von Metallen bzw. Metallen und Liganden bestimmt je nach Orientierung der Orbitale, ob es sich um eine ferromagnetische oder eine antiferromagnetische Wechselwirkung handelt. Die zugrundeliegenden Mechanismen sind dem Fachmann bekannt. Die Austausch- oder Superaustauschpfade haben damit einen direkten Bezug zur chemischen Struktur einer Koordinationsverbindung. Deren magnetischen Eigenschaften können also über ein gezieltes Moleküldesign gestaltet werden.

Ein Ferri- oder Ferromagnetismus setzt quasi eine räumliche Überstruktur voraus, innerhalb derer sich eine magnetische Kopplung fortsetzen kann. Entsprechend den Weißschen Bezirken im Fall metallischer Magnete, benötigen organische oder metallorganische Magnete die Verankerung in ausgedehnten Netzwerken, die die optimale Nähe der Spinzentren zueinander gewährleisten und vorzugsweise eine periodische Struktur haben. Dies können Koordinationspolymere mit einer eindimensionalen Ausdehnung oder auch komplexere zwei- und dreidimensionale Netzwerke sein. Im Fall von metallorganischen Verbindungen spricht man bei einem solchen System auch von einem Koordinationsnetzwerk oder metal-organic framework (MOF). Ein Beispiel für ein solches - allerdings nicht magnetisches - Netzwerk ist Zn₄(1,4-Benzendicarboxylat)₃ mit einer kubischen Überstruktur. Es ist auch möglich geeignete Koordinationsverbindungen auf einer Oberfläche, etwa einer Folie, z. B. PVA, in einer passenden Ordnungsstruktur zu immobilisieren.

Der Stand der Technik kennt eine Vielzahl molekularer Magnete auf organischer und metallorganischer Basis, die sich - eine ausreichend hohe Curie-Temperatur vorausgesetzt - als Zweitstufensicherheitsmerkmal eignen würden.

Die erfinderische Lösung beinhaltet als wesentliches Element vielmehr ein Echtheitsmerkmal, das die Ausbildung einer magnetisierbaren oder magnetischen Eigenschaft unter der Einwirkung einer energiereichen Strahlung, bevorzugt elektromagnetischer Strahlung, bewirkt. Die Bestrahlung kann mit einer Wellenlänge erfolgen, um den magnetisierbaren Stoff fotochemisch zu magnetisieren oder zusätzlich mit einer zweiten Wellenlänge, um die Magnetisierung wieder zu löschen. Alternativ kann das Löschen auch durch eine Erhitzung erfolgen, da solche metallorganischen Systeme ab einer bestimmten Temperatur wieder in den diamagnetischen Grundzustand relaxieren.

Der grundlegende Mechanismus für diese schaltbare magnetische Eigenschaft ist ein fotochemischer Spin-Crossover-Effekt (SCO), der in metallorganischen Verbindungen auftreten kann. Unter einem Spin-Crossover versteht man den Übergang on eine Low Spin-Zustand (LS) in einen High Spin-Zustand (HS). Der Übergang von LS zu HS oder umgekehrt, in dem Fall ein inverser SCO, kann durch Temperatur, Druck, Licht, Adsorption / Desorption in Wirtsgitter, über eine Redoxreaktion stimuliert werden. Für diese Erfindung ist die lichtinduzierte Form bevorzugt. Ein thermischer SCO ist im Sinne der Erfindung jedoch auch nutzbar, wenn eine einwirkende elektromagnetische Strahlung sekundär einen thermischen Effekt auslöst. Nicht in jeder Koordinationsverbindung ist ein thermischer SCO beobachtbar. Meistens tritt er jedoch in Verbindungen auf, die bereits einen LIESST-Effekt aufweisen.

Ein lichtinduzierter SCO zu einem stabilen HS-Zustand ist einerseits direkt durch eine optische Anregung der Metall-d-Orbitale erreichbar oder wird durch die Wechselwirkung zwischen dem Metallkern eines Komplexes und einem oder mehrerer fotoaktiver Liganden bewirkt. Die direkte Anregung der Metallorbitale wird auch LIESST-Effekt bezeichnet (Light Induced Excited Spin State Trapping), während die ligandengesteuerte Variante als LD-LISC-Effekt bekannt ist (Ligand Driven Light Induced Spin-Crossover).

Der LIESST-Effekt wurde erstmals von Decurtins et al am [Fe(ptz)6](BF4)2 (ptz = 1-Propyltetrazol; Chemical Physics Letters 1984, 105, 1-4) entdeckt. In diesem Beispiel führt eine Anregung mit grünem Licht entsprechend einer Absorptionsbande bei 515,5 nm, aber auch die Anregung mit einer Strahlung im NIR bei 980nm über Intersystem Crossing (IC) bzw. einer IC-Kaskade zu einem metastabilen ⁵T₂-Zustand (HS-Form), während eine Bestrahlung mit rotem Licht, entsprechend einer Absorptionsbande bei 820 Nanometer, den Komplex über eine Anregung in den ⁵E-Zustand und eine nachfolgenden Relaxationskaskade wieder in den Grundzustand (¹A₁-Zustand) und damit in die LS-Form überführt. Der LIESST-Prozess ist in den meisten bekannten Fällen nur bei kryogenen Temperaturen möglich. Für die meisten bekannten fotostimulierbaren Spinübergänge trifft es dabei zu, dass LIESST-Übergänge bei Temperaturen unter 50 Kelvin stattfinden und beispielsweise im Fall oktaedrischer Komplexe der ⁵T₂-Zustand quasi durch einen Pumpeffekt quantitativ mit der HS-Form bevölkert wird. Die Entwicklung des Fachgebietes führt aktuell in einen für eine erfindungsgemässe, praktikable Anwendung nutzbaren Bereich wie Real et al am Beispiel von [Fe(pyrazin){Pt(CN)4}] zeigen konnten (Angew. Chem. 2005,117 (26), 4137-4141). In diesem Beispiel findet der Übergang mit einem Laserpuls vollständig statt, wobei sich eine breite Hysterese von annähernd rechteckiger Form um Raumtemperatur bewegt. Der Komplex ist bei Raumtemperatur für Monate haltbar, theoretisch unbegrenzt, was hinsichtlich einer für ein Sicherheitsdokument benötigten Lebensdauer von 1 bis 20 Jahren, bevorzugt 5 bis 10 Jahren, von Bedeutung ist. Damit zeigt sich, dass bei geeignetem Molekül-Design der LIESST-Effekt und seine inverse Form praktikabel sind, um die erfindungsgemässe Aufgabe zu erfüllen. Desweiteren ist es für eine erfindungsgemässe Nutzung der LIESST-fähigen Komplexe bedeutsame, diese in einer geeigneten Konfektionierung für eine weitere Verarbeitung vorzulegen. Beispielsweise zeigt die bereits 1988 von Hauser et al (Chem. Phys. Lett., 1988, 152, 468) beschriebene Einbettung eines zum LIESST-Effekt geeigneten Komplexes in Polymermatrices, dass solche Koordinationsverbindungen oder auch ganze Koordinationsnetzwerke unter Funktionserhalt ihrer optomagnetischen Eigenschaften auf Träger aufgebracht bzw. in Träger eingebracht werden können, die sich direkt zur Herstellung von Sicherheitsdokumenten wie z. B. ID-Karten eignen.

Der SCO mit einer thermischen Hysterese kann ebenfalls zur Lösung der Aufgabe führen, wenn nämlich bei einer breiten Hysterese um Raumtemperatur über die thermische Wirkung eines Energiestrahls, bevorzugt eines Laserstrahls, z. B. eines üblichen im NIR arbeitenden Lasers, das Sicherheitsdokument im LS-Zustand des Trägers des magnetischen Merkmals mit dem Laser an den Stellen, an denen eine Personalisierung erzeugt werden soll, kontrolliert erhitzt wird. Da bei SCO-Materialien typischerweise der Hysteresebereich bei tiefen Temperaturen stattfindet, müsste die Aktivierung des Magnetismus in einer gekühlten Umgebung stattfinden. Die ausgefeilten Bedingungen einer solchen Magnetisierung können als weiterer Sicherheitsvorteil verstanden werden. Zwischen dem magnetisierten und nicht magnetisierten Zustand kann beliebig oft durch Aufheizen mit dem Laser und Abkühlen in einer geeigneten Vorrichtung hin- und her geschaltet werden.

SCO-Komplexe mit genügend breiten Hystereseschleifen sind machbar. Interessante Beispiele wurden von Weber et al (70 K; Angew. Chem. Int. Ed.2008, 47, 10098-10101) und Bushuev et al (130K, Dalton Trans., 2014, 43, 3906) vorgeschlagen. Real et al (Chem. Commun., 2012, 48, 4686-4688) demonstrierten ein Beispiel eines MOF, dass dreidimensional ausgedehnte Strukturen auch eine breite Hysterese, in diesem Fall 70 K, aufweisen können und damit eine kooperative Kopplung zu einem makroskopisch messbaren Magnetismus möglich ist.

Eine weitere Option zur Erfüllung der erfinderischen Aufgabe stellt der ligandengesteuerte SCO dar. Beispielsweise sind bestimmte Eisenkomplexe mit Styrylpyridin-Liganden dafür bekannt, dass sie durch lichtinduzierte Umlagerung von der trans- in die cis-Konfiguration übergehen können und dabei ein Übergang von einem LS- in einen -HS-Zustand eingehen. Die trans-Form zeigt jedoch unterhalb von 163 K einen thermischen SCO, der mit einem massiven Ansteigen der Suszeptibilität verbunden ist. Es sind auch ligandengesteuerte Systeme bekannt, die einen SCO bei Raumtemperatur aufweisen. So weist der Komplex [Fe(trans-msbpy)₂(NCS)₂] einen SCO zwischen 264 und 380K auf, wobei er bei RT nahezu diamagnetisch ist (trans-msbpy = 4-Methyl-4'-trans-styryl-2,2'-bipyridin; M.-L. Boillot et al, New. J. Chem 1999, 23, 179). In diesem Fall ist der Hysteresebereich für eine erfindungsgemässe Anwendung in einem zu hohen Temperaturbereich, aber es zeigt sich damit, dass über ein geeignetes Moleküldesign ein sinnvoller Temperaturbereich geschaffen werden kann. Aussichtsreiche System sind auch solche, in denen ein fotoschaltbarer Ligand die Koordinationszahl ändert und auf diesem Weg einen HS- oder LS-Zustand herbeiführt. Beispielsweise beschreibt C. Bornholdt (Dissertation, "Ligandengetriebener lichtinduzierter Spin-Crossover in Einzelmolekülen", Christian-Albrechts-Universität zu Kiel, 2008) bistabile Systeme auf Nickelbasis, die bei Bestrahlung mit 365nm bzw. 440nm umgeschaltet werden können.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische seitliche Ansicht eines Flächenelementes eines Sicherheitsdokumentes gemäss einem Ausführungsbeispiel der Erfindung;
- Fig. 2: eine Draufsicht auf einen Datenträger mit einem Flächenelement eines Sicherheitsdokument gemäss Fig. 1;
- Fig. 3: ein Sicherheitsdokument gemäss Fig. 2 während der Aktivierung (Magnetisierung) durch einen Laser (Schreibvorgang bzw. magnetische Personalisierung);
- Fig. 4: ein Sicherheitsdokument gemäss Fig. 2 während der Aufhebung der Magnetisierung durch einen Laser (Löschvorgang);
- Fig. 5: ein Sicherheitsdokument gemäss Fig. 2 mit magnetischer Information während der Visualisierung des Magnetfeldes mit einem entsprechenden Handgerät;
- Fig. 6: ein Sicherheitsdokument gemäss Fig. 2 mit magnetischer Information während der zweidimensionalen Aufzeichnung des Magnetfeldes mit einem Scanner; und
- Fig. 7: ein Sicherheitsdokument gemäss Fig. 2, teilweise in einem Leseschlitz einer Workstation eingesteckt, die sämtliche Elemente zur bildgebenden Erfassung des Magnetfeldes enthält.

### BESCHREIBUNG BEVORZUGTER AUSFÜHRUNGSFORMEN

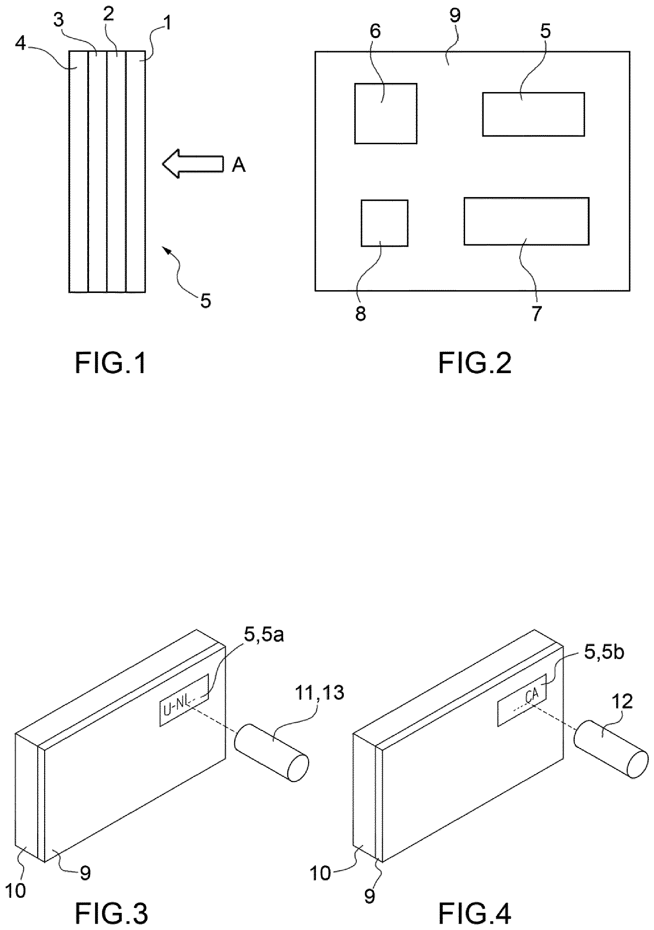

Die Fig. 1 eine schematische seitliche Ansicht eines Flächenelementes 5 eines Sicherheitsdokumentes 9 gemäss einem Ausführungsbeispiel der Erfindung und die Fig. 2 zeigt eine Draufsicht auf einen Datenträger mit einem Flächenelement 5 eines Sicherheitsdokumentes 9 gemäss Fig. 1.

Fig. 1 zeigt also die Schichtenfolge im Aufbau des relevanten Anteils des Sicherheitsdokumentes 9. Dabei kann es sich auch um einen Ausschnitt eines Sicherheitsdokumentes 9 handeln, beispielsweise um den Querschnitt eines Abschnittes, der in einen in einem Substrat vorgesehenen Ausschnitt eingesetzt ist, ähnlich einem Chip in einem Datenträger.

Die Schichtenfolge ist von der Seite A, der dem Betrachter zugewandten Seite wie folgt: Auf die Deckschicht 1, die für stimulierende Laserstrahlung im sichtbaren Bereich und in den angrenzenden UV und IR Bereichen transparent ist, folgt eine Funktionsschicht 2, die die weiter unten beschriebenen Molekülmagnete enthält. Diese Funktionsschicht 2 ist auf einer Trägerschicht 3, insbesondere einem Substrat angeordnet, welche optional von einer Schicht 4 zur Unterstützung einer Kühlwirkung gefolgt wird.

Der flächige Datenträger ist mit einem Flächenelement 5 versehen, welches für das Sicherheitsdokument 9 wesentlich ist und damit eine Molekülmagnete enthaltende Funktionsschicht 2 aufweist, die somit mindestens teilweise das Sicherheitsdokument 9 überdeckt. Das Flächenelement kann prinzipiell den gesamten Datenträger überdecken. Ferner weist der Datenträger, beispielsweise im Kreditkartenformat oder eine Datenseite für einen Pass, ein zweites Flächenelement 6 auf, welches ein sichtbares Porträtbild enthält, ein drittes Flächenelement 7 mit einer sichtbaren Personalisierung und ein viertes Flächenelement 8 mit einer maschinenlesbaren Personalisierung. Die Flächenelemente 6, 7 und 8 sind optional und vorteilhafterweise zur Erhöhung der Sicherheit vorgesehen. Es ist dabei weiter von Vorteil bei der vorliegenden Erfindung, dass das Flächenelement 5 die Flächenelemente 6, 7 und/oder 8 zumindest teilweise überlappt.

Die Fig. 3 und 4 zeigen ein Sicherheitsdokument 9 gemäss Fig. 2 während der Aktivierung (Magnetisierung) durch einen Laser (Schreibvorgang bzw. magnetische Personalisierung); beziehungsweise ein Sicherheitsdokument 9 gemäss Fig. 2 während der Aufhebung der Magnetisierung durch einen Laser (Löschvorgang).

Das Sicherheitsdokument 9, z. B. ID-Karte auf Polycarbonatbasis, ist hier zur Vereinfachung nur mit dem Flächenelement 5 der Funktionsschicht Molekülmagnete dargestellt. In der Fig. 3 ist ein erster Laser 11 dargestellt, bei dem es sich um den mindestens einen ersten Laser zur Erzeugung des HS-Zustandes über den LIESST-Pfad handelt. Der Lichtstrahl des ersten Lasers 11 durchdringt die hier nicht dargestellte transparente Deckschicht 1 ohne wesentliche Wechselwirkung und wirkt auf die Molekülmagnete ein, um hier zu den schon erstellten Buchstaben "U-NI" das "C" hinzuzufügen. Es handelt sich dabei daher um eine teilweise fertiggestellte Magnetisierung 5a.

Der erste Laser ist zusätzlich mit dem Bezugszeichen 13 versehen, da alternativ zum ersten Laser 11 es auch mindestens einen ersten Laser 13 geben kann, zur Erzeugung des HS-Zustandes auf dem Weg eines thermischen SCO.

Mit dem Bezugszeichen 10 ist eine unterhalb, gegenüber der Blickrichtung A auf der die Kühlwirkung verbessernde Schicht 4 angeordnete Kühlvorrichtung 10 dargestellt, die bei der Beaufschlagung des Sicherheitsdokumentes 9 dieses bei einer vorbestimmten Temperatur hält, wobei diese tiefe Temperatur von zum Beispiel -60° Celsius als Temperatur für den LIESST-Effekt unliebsame molekülchemische Veränderungen des Flächenelementes 5 und des Sicherheitsdokumentes 9 insgesamt vermeiden helfen soll. Ein Sicherheitsdokument verträgt in der Regel eine kurzzeitige Abkühlung auf tiefere Temperaturen, aber unter -60°C ist Polycarbonat nicht mehr verwendbar]

In der Fig. 4 wird davon ausgegangen, dass mit dem in Fig. 3 dargestellten Verfahren, durch den Einsatz eines ersten Lasers 11 oder 13 der Schriftzug "U-NICA" mit einer der genannten alternativen Vorgehensweisen erzeugt worden ist. Dann ist ein zweiter Laser 12 gegenüber der transparenten Deckschrift 5 angeordnet, um durch Beaufschlagung der Funktionsschicht 2 mit Molekülmagneten, diese zur Rückkehr in den LS-Zustand zu beeinflussen. Dabei sind vom Schriftzug schon die Buchstaben "U-NI" verschwunden und nur noch die Buchstaben "CA" werden bearbeitet werden, so dass das Flächenelement auch mit dem Bezugszeichen 5b versehen it, um die teilweise erfolgte Aufhebung der Magnetisierung zu kennzeichnen. Der löschende Laser kann, muss aber nicht, der magnetiserten Linie, in diesem Fall der Buachstabenlinien des Wortes U-NICA, folgen. Er kann auch links und rechts davon agieren oder auch die gesamte Funktionsschicht überstreichen, was technisch die einfachste Lösung darstellt.

Es wird in Bezug auf die Figs. 3 und 4 festgehalten, dass der Schriftzug "U-NICA" teilweise nicht vom unbewaffneten Auge gesehen werden kann, sondern es sich um entsprechend magnetisch feststellbare Veränderungen von Bereichen in der Funktionsschicht 2 handelt, die durch geeignete Messgeräte festgestellt werden können. Der SCO ist häufig mit einem Farbwechsel verbunden. Dies kann man mit einer farbigen Deckschicht kaschieren, sofern diese ausreichend durchlässig für einen Laserstrahl ist. Im Fall einer sichtbaren Personalisierung an der gleichen Stelle wie die magnetische Personalisierung ist das aber kein Thema.

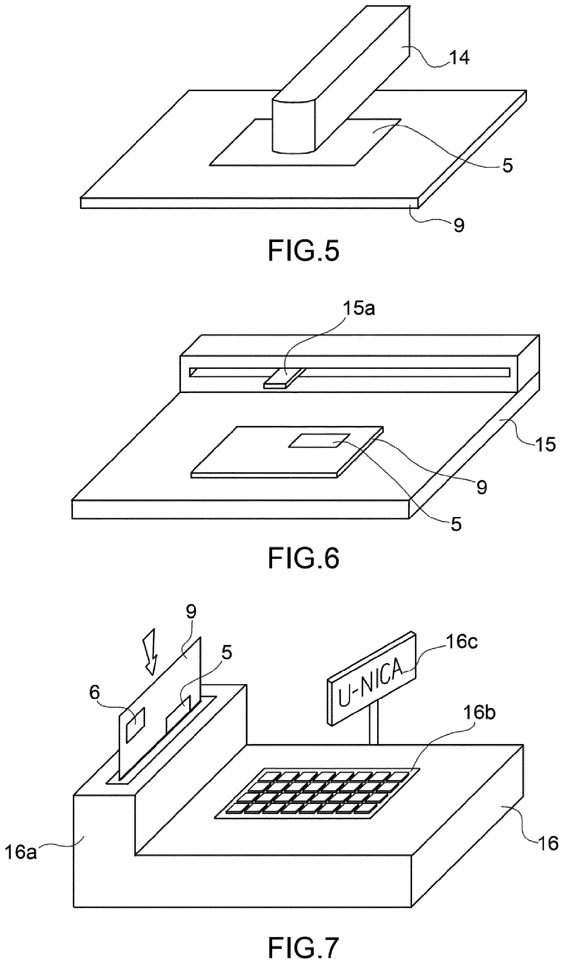

Die Fig. 5 zeigt ein Sicherheitsdokument 9 gemäss Fig. 2 mit magnetischer Information in einem Flächenelement 5 während der Visualisierung des Magnetfeldes mit einem entsprechenden Handgerät 14. Das Handgerät 14 ist vorgesehen, Vorhandensein und Anordnung der Molekülmagnete in der Funktionsschicht 2 nachzuweisen und anzuzeigen.

Die Fig. 6 zeigt ein Sicherheitsdokument 9 mit seinem integrierten Flächenelement 5 gemäss Fig. 1 mit magnetischer Information während der zweidimensionalen Aufzeichnung des Magnetfeldes mit einem Scanner 15. Der Scanner 15 ist zur Detektion der magnetisierten Regionen 2 des Flächenelementes 5 ausgestaltet, fakultativ mit einem gekühltem Scannerbett (nicht dargestellt) versehen. Dabei ist ein Arm 15a Teil eines Moduls zur Erfassung der örtlichen Suszeptibilität bzw. Magnetisierung. Beim Auslesen kann man natürlich auch kühlen. Das in der Fig. 6 dargestellte Handgerät hat die Möglichkeit nicht, was seinen Nutzen auf molekulare Magnete einschränkt, die bei Raumtemperatur aktivierbar bzw. detektierbar sind.

Die Fig. 7 zeigt ein Sicherheitsdokument 9 gemäss Fig. 1, das teilweise in einem Leseschlitz einer Workstation 16 eingesteckt ist, wobei diese Workstation 16 sämtliche Elemente zur bildgebenden Erfassung des Magnetfeldes enthält. Die in Table-Top-Ausführung vorgesehene Workstation 16 weist eine integrierte Aufnahme des Sicherheitsdokumentes 9 auf, wobei das Flächenelement 5 davon mindestens teilweise im Bereich des magnetischen Scanners eingeschoben ist.

Die Workstation 16 umfasst einen hinteren Geräteteil 16a mit einem magnetischem Scanner, mit dem ein in einen Schlitz der Workstation 16 eingestecktes Sicherheitsdokument 9 überprüfbar ist. Eine Eingabeeinheit 16a der Workstation 16 kann eine Tastatur bzw. Tastatur und Maus oder ein Touchpad etc. umfassen. Ferner ist ein Bildschirm 16c zur visuellen Beurteilung des magnetischen Bildes und zur Bedienung der Workstation 16 vorgesehen. Hier ist der magnetisch ausgelesene Schriftzug "U-NICA" auf dem Bildschirm 16c zu sehen, wie er sich nach Vollendung des Schreibschrittes nach Fig. 3 ergibt.

Es sind natürlich auch weitere Geräteausführungen denkbar. Die Geräteausführungen gemäss Figur 5 bis 7 stellen nur Beispiele dar.

Das Sicherheitsdokument 9 in Form einer Karte oder einer kartenähnlichen Personalisierungsseite besteht aus mehreren Schichten, die mindestens eine Trägerschicht 3 und eine darauf befindliche Schicht 2 mit den die magnetische Funktion tragenden Molekülen (Funktionsschicht) umfasst. Auf der Oberseite der Funktionsschicht 2 (auf der dem Betrachter zugewandten Seite A) befindet sich eine nicht zwingend vorhandene Deckschicht 1, die für den Laserstrahl der Laser 11, 12, 13 transparent sein sollte, aber nicht zwingend für das menschliche Auge. Es ist jedoch eine Voraussetzung, dass diese Deckschicht 1 die Ausdehnung des Magnetfeldes nicht beeinträchtigt. Demnach wäre eine Polycarbonatfolie an sich als Deckschicht 1 geeignet, jedoch beispielsweise nicht dann, wenn sie am Ort des magnetischen Sicherheitsmerkmals metallisiert wäre. Die Rückseite der Karte kann, sofern eine Kühlung beabsichtigt ist, mit einer Schicht 4 versehen sein, die die Kühlwirkung optimiert.

Als erstes Ausführungsbeispiel wird der Magnetisierungsschritt nach Fig. 3 mit dem ersten Laser 11 genannt. Dabei wird der LIESST-Übergang in einer Koordinationsverbindung mit Metallzentren von 3d-Metallen, insbesondere Eisen (II), Eisen(III), Nickel(II), Chrom(II) oder Mangan(III), bevorzugt direkt verknüpft mit gleichen Metallkationen des gleichen Elementes, aber nicht unbedingt der gleichen Oxidationsstufe, was z. B. die Kombination sowohl von Fe(II) mit Fe(II) sowie Fe(II) mit Fe(III) erlaubt.

Als zweites Ausführungsbeispiel wird der ansonsten gleiche Magnetisierungsschritt nach Fig. 3 mit dem ersten Laser 11 genannt. Der LIESST-Übergang in einer Koordinationsverbindung mit Metallzentren einer ersten Sorte von 3d-Metallen, insbesondere Eisen (II), Eisen(III), Nickel(II), Chrom(II) oder Mangan(III), jedoch in Kombination mit einem zweiten Metall ausgewählt aus der Gruppe aller Übergangsmetalle, beispielsweise die Kombination von Eisen (II) mit Vanadium(IV), wobei die zweiten Metallionen mit einem Spin von S=1/2 oder höher über diamagnetische Ligandenbrücken mit den Metallzentren der ersten Sorte verknüpft sind. Als Brückenliganden können Cyanido-Liganden dienen, aber auch organische Liganden, die eine Koordination über beispielsweise Stickstoff oder Sauerstoff ermöglichen, wobei entweder die Verknüpfung der Metallionen mit den Liganden so erfolgt, dass eine der beiden Metall-Ligand-Bindungen nicht zu einer Orbitalüberlappung führt und sich eine ferromagnetische Wechselwirkung ausbilden kann oder es zu einer durchgehenden Orbitalüberlappung kommt, es sich also eine anti-ferromagnetische Wechselwirkung zwischen einem Metall der ersten und einem Metall der zweiten Sorte einstellt, sofern immer noch ein Gesamtspin der Koordinationsverbindung insgesamt erhalten bleibt. Über die gesamte Koordinationsverbindung hinweg liegt in diesem zweiten Fall demnach eine ferrimagnetische Wechselwirkung vor. Es sind auch Koordinationssphären mit Schwefel oder Phosphor oder anderen Elektronendonatoren möglich.

In beiden oben genannten Ausführungsbeispielen ist es denkbar, die LIESST-fähige Koordinationsverbindung in einem Wirtskomplex mit einem geeigneten Zentralion, beispielsweise Zink oder Mangan zu umgeben, um die LIESST-Übergangstemperatur anzuheben.

Beide Ausführungsbeispiele beziehen sich auf Koordinationsverbindungen mit 3d-Metallen. Die erfindungsgemässe Lösung ist jedoch nicht auf diese beschränkt. Vielmehr können auch Übergangsmetalle höherer Perioden sowie auch Lanthaniden Zentralionen geeignet sein.

In beiden Ausführungsbeispielen wird das Spin-Trapping mit einem Laser mit grünem Licht stimuliert, z. B. einem Argonionenlaser (514.5 Nanometer m) oder einem frequenzverdoppelten Nd:YAG-laser (532 Nanometer). Dabei erfolgt eine Anregung in den ¹T₁-Zustand. Es kann alternativ auch die Anregung in den spinverbotenen ³T₁ mit Hilfe eines Diodenlasers bei 980 Nanometer unternommen werden. Eine Rückschaltung in den LS-Zustand wird z. B. mit einem weiteren Diodenlaser bei 820 nm (Übergang von ⁵T₂ zu ⁵E und nachfolgendem mehrfachen strahlungslosen Übergang in den diamagnetischen ¹A₁-Zustand) vorgenommen. Es ist für eine kompakte Ausgestaltung der Gerätschaft für diese fotomagnetischen Schaltung sinnvoll, aber nicht zwingend, eine Kombination von Diodenlasern, die mit den Wellenlängen 820 und 980 Nanometer arbeiten, zu wählen.

Zur Ausbildung eines mit im Sicherheitsumfeld gängigen Geräts zur Visualisierung eines magnetischen Feldes müssen die magnetischen Einzelmoleküle oder Gruppen von Einzelmolekülen (Cluster) eine Austauschwechselwirkung über ein ausgedehntes Areal bzw. eine Domäne aufweisen. Diese Domänen weisen eine Grösse von 10 nm bis 1000 µm, bevorzugt 1 bis 100 µm auf: Die Kopplung wird durch eine geeignet dichte Packung der magnetischen Einzelmoleküle bzw. Molekülgruppen auf einem Träger, beispielsweise als Film, oder eingebettet in ein Wirtsgitter von Käfigverbindungen oder Kristallgittern mit einer geeigneten Grösse der Kavitäten, oder über eine Vakuumdeposition bewerkstelligt. Alternativ kann ein ausgedehntes Koordinationsnetzwerk auf der Grundlage einer zwei-oder dreidimensional vernetzten Koordinationsverbindung, beispielsweise als Polymer oder in kristalliner Form, zur Ausbildung der Domänen dienen.

Damit eine praktische Nutzung des Magnetismus im Sinne der Erfindung erfolgen kann, befindet sich die Raumtemperatur innerhalb des Hysteresefensters und die Relaxationskonstante des HS-Zustandes in einer zweckentsprechenden Grössenordnung. Unter einer zweckentsprechenden Grössenordnung ist entweder
- ein mindestens teilweiser Erhalt des HS-Zustands über einen Monat bis zehn Jahren zu verstehen, sofern das Sicherheitsdokument eine Information auf der Grundlage der molekulare Magnetisierung als dauerhaftes Merkmal tragen oder
- ein mindestens teilweiser Erhalt im Bereich von Minuten und Sekunden, sofern eine Verifikation des magnetischen Merkmals quasi in situ, d. h. unmittelbar während oder nach der Bestrahlung erfolgen soll.

Bei einer rein instrumentellen Auswertung des magnetischen Sicherheitsmerkmals, sofern lediglich die unmittelbare Antwort des magnetischen Merkmals nach einer Laserstimulation erfasst werden soll, genügt eine den Erfordernissen des technischen Systems entsprechende Lebensdauer des HS-Zustandes. Die Untergrenze für diese Lebensdauer ist damit durch die technischen Möglichkeiten des Frage/Antwort-Systems begrenzt. Eine visuelle Kontrolle der Magnetisierung oder eine instrumentelle Frage/Antwort-Verifikation erfordern Verifikationsgeräte, die neben der Funktion der Detektion des Magnetfeldes auch über eine Lasereinrichtung mit Lasern geeigneter Wellenlänge, Leistung und Pulsfolge verfügt. Beispielsweise lassen sich heute übliche Magnetfeldvisualisierungsvorrichtungen mit Laserdioden bestücken, die den Anforderungen genügen. Falls erforderlich kann eine Vorrichtung zur Erzeugung des Magnetismus mit einer Kühlung ausgestattet sein, die das Sicherheitsdokument, z. B. die ID-Karte kurzzeitig unter die LIESST-Temperatur abkühlt, indem z. B. eine gekühlte Oberfläche in vollflächigen Kontakt mit der rückseitigen Oberfläche der ID-Karte gebracht wird. Diese Kühleinrichtung ist bei stationären oder halbstationären Verifikationsgeräten realisierbar. Die Kühlung erfolgt in diesen Fällen z. B. über flüssigen Stickstoff oder, falls in Bezug auf die zu erreichende Temperatur ausreichend, auch mit Peltierelementen.

Eine weitere Ausführungsform zeigt die Magnetisierung über einen rein thermischen SCO unter Nutzung der thermischen Wirkung eines Laserstrahls. Thermische Laserverfahren im Bereich der Sicherheitstechnologie werden z. B. zur Herstellung von s/w Bildern auf dem Wege einer Carbonisierung genutzt. Bei dieser Anwendung kann ein bilderzeugender Laser für das gleiche Dokument eine Magnetisierung stimulieren.

Eine Erhöhung der Temperatur des Sicherheitselementes und der Karte über den Curiepunkt hinaus hebt die makroskopische Magnetisierung auf und stellt einen Löschvorgang dar. Selbst dann, wenn ein thermischer SCO den HS-Zustand bevölkert. Eine Temperaturerhöhung verursacht aufgrund der Relaxation des Spinsystems die Geschwindigkeitskonstante für den Rückgang der Molekularmagnete in einen diamagnetischen Grundzustand. Sofern die Molekularmagnete nicht nur einen fotomagnetischen Übergang in den HS-Zustand erlauben, sondern auch einen thermischen SCO, wird das Spingleichgewicht bei höheren Temperaturen in Richtung des HS-Zustandes verschoben und damit eine höhere Robustheit der magnetischen Information auf dem Sicherheitsdokument unterstützt.

Schliesslich ist auch eine fotochemisch bewirkte Bildung von Molekülen mit einer stabilen radikaltragenden Funktion als erfindungsgemässe Lösung einsetzbar.

Diese lasergestützten Verfahren für einen SCO mit der Ausbildung von magnetischen Kopplungen verlangen zusätzlich eine Systemeigenschaft, die einen kooperativen Effekt erlaubt, da sonst der erfindungsbedingte makroskopische Magnetismus ausbleibt bzw. zu klein ist, um diesen mit den im Sicherheitsumfeld üblichen Nnachweisen sicher nachweisen zu können.

**BEZUGSZEICHENLISTE**

| | | | |
|---|---|---|---|
| A | dem Betrachter zugewandte Seite | 8 | Flächenelement mit einer maschinenlesbaren Personalisierung |
| B | Rückseite, dem fakultativen Kühlgerät zugewandt | 9 | Sicherheitsdokument |
| 1 | transparente Deckschicht | 10 | Kühlvorrichtung |
| 2 | Funktionsschicht mit Molekülmagneten | 11 | erster Laser (LIESST-Pfad) |
| 3 | Trägerschicht | 12 | zweiter Laser |
| 4 | Schicht für Kühlwirkung | 13 | erster alternativer Laser (SCO) |
| 5 | Flächenelement der Funktions-schicht Molekülmagnete | 14 | Handgerät zur Visualisierung eines Magnetfeldes |
| 5a | teilweise fertiggestellte Magnetisierung | 15 | Scanner |
| | | 15a | Erfassungsmodul der lokalen Suszeptibilität bzw. Magnetisierung |
| 5b | teilweise erfolgte Aufhebung der Magnetisierung | 16 | Workstation |
| 6 | Flächenelement mit Porträtbild | 16a | Geräteteil mit magnetischem Scanner |
| 7 | Flächenelement mit einer sichtbaren Personalisierung | 16b | Eingabeeinheit der Workstation |
| | | 16c | Bildschirm |

## Patentansprüche

1. Datenträger (9), insbesondere eine Kunststoffkarte, mit einem in dem Datenträger vorgesehenen Echtheitsmerkmal (5), das bei Bestrahlung mit einem energiereichen Strahl durch Veränderung von physikalischen und/oder chemischen Eigenschaften personalisierbar ist, **dadurch gekennzeichnet, dass** als personalisierbares Echtheitsmerkmal ein magnetisierbares Echtheitsmerkmal in einer Funktionsschicht (2) vorgesehen ist, das einen ein Schreiben von Informationen erlaubenden opto-magnetischen Effekt aufweist, so dass an einer bestrahlten Stelle (5a) ein magnetisches Zweitstufenmerkmal mit einem makroskopisch messbaren Magnetismus ausgebildet ist.

2. Datenträger nach Anspruch 1, wobei das magnetisierbare Echtheitsmerkmal aus Molekülmagneten besteht, die eine organische oder metallorganische Basis haben und zu hinreichend grossen ein- bis dreidimensionalen Strukturen organisiert sind, damit sich ein Ferro- oder Ferrimagnetismus ausbilden kann.

3. Datenträger nach Anspruch 2, wobei die Molekülmagnete durch den Paramagnetismus ihrer metallorganischen Verbindungen einen mikroskopischen Gesamtdrehimpuls des elektronischen Systems dieser Verbindungen aufweisen, der sich aus dem Gesamtspin der beteiligten Metallionen und der Spinkopplung der elektronischen Systeme dieser Ionen ergibt, wobei die besagte mikroskopische Spinkopplung der als Komplexe angeordneten metallorganischen Verbindungen auf Grund einer supramolekularen Kopplung des Spins eines Moleküls oder eines Molekülverbands einen makroskopisch messbaren Magnetismus begründen.

4. Datenträger nach Anspruch 3, wobei die Molekülmagnete einen fotochemischen Spin-Crossover-Effekt (SCO) aufweisen, wobei die Bestrahlung mit einem energiereichen Strahl einen zum SCO führenden thermischen Effekt auslöst.

5. Datenträger nach Anspruch 4, wobei der Datenträger eine für eine Kühlung vorbereitete rückseitige Schicht (4) aufweist.

6. Datenträger nach einem der vorstehenden Ansprüche, wobei der energiereiche Strahl ein Strahl eines Lasers (11, 13) oder ein Elektronen- oder Neutronenstrahl ist.

7. Datenträger nach einem der vorstehenden Ansprüche, wobei die Funktionsschicht (2) von einer für den energiereichen Strahl und für die Merkmalserfassung transparenten Deckschicht (1) abgedeckt ist.

8. Datenträger nach einem der vorstehenden Ansprüche, wobei das magnetische Merkmal eine magnetische Zeichenfolge, insbesondere aus der Gruppe umfassend alphanumerische Zeichen und digitale Codes wie Barcodes, ein magnetisches Bild oder eine sonstige magnetisch erfassbare Information aufweist.

9. Datenträger nach einem der vorstehenden Ansprüche, wobei das magnetische Merkmal als Bestandteil einer Druckerfarbe auf ein Substrat (3) des Datenträgers oder eine andere Schicht des Datenträgers aufgebracht ist oder in eine Schicht, insbesondere Kunststoffpolymerschicht, des Datenträgers eingebunden ist.

10. Verfahren zum Beschreiben eines Datenträgers (9) mit einem in dem Datenträger vorgesehenen magnetisierbaren Echtheitsmerkmal (5), das bei Bestrahlung mit einem energiereichen Strahl, durch Veränderung von physikalischen und/oder chemischen Eigenschaften personalisierbar ist, für einen Datenträger nach einem der Ansprüche 4 oder 5, **gekennzeichnet durch** die Schritte des Erzeugens einer magnetischen Information durch lokale Erhitzung der Molekülmagnete zum Erzeugen eines SCO-Effektes und durch das Löschen von magnetischer Information durch Kühlung der Molekülmagnete zum Erzeugen eines inversen SCO-Effektes.

## Claims

1. Data carrier (9), in particular a plastics card, having an authenticity feature (5) provided in the data carrier, which feature is personalizable under irradiation with a high-energy beam by changing physical and/or chemical properties, **characterized in that** a magnetizable authenticity feature is provided in a functional layer (2) as personalizable authenticity feature, which comprises an opto-magnetic effect allowing writing of information, such that at an irradiated location (5a) a magnetic second-level feature is brought about together with a macroscopically measurable magnetism.

2. Data carrier according to claim 1, wherein the magnetizable authenticity feature consists of molecular magnets which have an organic or metal-organic base and are organized in sufficiently large one-dimensional to three-dimensional structures so that ferromagnetism or ferrimagnetism can arise.

3. Data carrier according to claim 2, wherein owing to the paramagnetism of their metal-organic compounds, the molecular magnets have a total moment of the electronic system of these compounds that results from the total spin of the participating metal ions and the spin coupling of the electronic systems of these ions, wherein the microscopic spin coupling of the metal-organic compounds which are arranged as complexes give rise to a macroscopically measurable magnetism based on a supramolecular coupling of the spin of a molecule or of a molecule structure.

4. Data carrier according to claim 3, wherein the molecular magnets have a photochemical spin crossover effect (SCO) wherein the irradiation with a high-energy beam induces a thermal effect leading to the SCO.

5. Data carrier according to claim 4, wherein the data carrier has a rear-side layer (4) which is prepared for cooling.

6. Data carrier according to any one of the preceding claims, wherein the high-energy beam is a beam of a laser (11, 13) or an electron or neutron beam.

7. Data carrier according to any one of the preceding claims, wherein the functional layer (2) is covered by a cover layer (1) which is transparent for the high-energy beam and for the feature capturing.

8. Data carrier according to any one of the preceding claims, wherein the magnetic feature has a magnetic sequence of characters, in particular from the group comprising alphanumeric characters and digital codes such as barcodes, a magnetic image or any other magnetically capturable information.

9. Data carrier according to any one of the preceding claims, wherein the magnetic feature, as a constituent part of a printing ink, is applied onto a substrate (3) of the data carrier or another layer of the data carrier or is incorporated in a layer, in particular plastic polymer layer, of the data carrier.

10. Method for writing a data carrier (9) with a magnetizable authenticity feature (5) provided in the data carrier, which feature is personalizable under irradiation with a high-energy beam by changing physical and/or chemical properties, for a data carrier according to one of the claims 4 or 5, **characterized by** the steps of generating the magnetic information through locally heating the molecular magnets for generating an SCO effect, and of extinguishing magnetic information through cooling the molecular magnets for generating an inverse SCO effect.

## Revendications

1. Support de données (9), notamment une carte en matière plastique, avec une caractéristique d'authenticité (5) prévue dans le support de données, laquelle caractéristique peut être personnalisée par irradiation avec un faisceau de haute énergie en modifiant les propriétés physiques et / ou chimiques, **caractérisé en ce qu'**une caractéristique d'authenticité magnétisable est prévue en tant que caractéristique d'authenticité personnalisable dans une couche fonctionnelle (2), laquelle comprend un effet opto-magnétique permettant une écriture d'informations, de telle sorte que à l'emplacement irradié (5a) est formée une caractéristique d'authenticité magnétique de deuxième niveau avec un magnétisme macroscopique mesurable.

2. Support de données selon la revendication 1, dans lequel la caractéristique d'authenticité magnétisable est constituée d'aimants moléculaires, qui ont une base organique ou organométallique, et qui sont organisés dans des structures suffisamment grandes en une à trois dimensions, de sorte qu'il se puisse former un magnétisme ferreux ou ferrique.

3. Support de données selon la revendication 2, dans lequel les aimants moléculaires ont un moment cinétique total microscopique du système électronique de ces composés par le paramagnétisme de leurs composés organométalliques, qui est le résultat du spin total des ions métalliques impliqués et le couplage de spin des systèmes électroniques de ces ions, où ledit couplage de spin microscopique des complexes des composés organométalliques disposés en fonction d'un couplage supramoléculaire des spins d'une molécule ou d'une association moléculaire établissent un magnétisme macroscopique mesurable.

4. Support de données selon la revendication 3, où les aimants moléculaires comprennent une transition de l'état de spin photochimique (SCO), dans lequel l'irradiation avec un faisceau de haute énergie déclenche un effet thermique menant à la transition SCO.

5. Support de données selon la revendication 4, dans lequel le support de données comprend une couche à l'arrière (4) préparée pour un refroidissement.

6. Support de données selon l'une quelconque des revendications précédentes, où le faisceau de haute énergie est un faisceau d'un laser (11, 13) ou un faisceau d'électrons ou de neutrons.

7. Support de données selon l'une quelconque des revendications précédentes, dans lequel la couche fonctionnelle (2) est recouverte par une couche (1) qui est transparente pour le faisceau de haute énergie et pour la détection de caractéristiques.

8. Support de données selon l'une quelconque des revendications précédentes, dans lequel la caractéristique magnétique comprend une suite de signes magnétiques, en particulier partant du groupe comprenant des caractères alphanumériques et des codes numériques tels que des codes à barres, une image magnétique ou d'autres informations détectables a base magnétique.

9. Support de données selon l'une quelconque des revendications précédentes, dans lequel la caractéristique magnétique est appliquée en tant que composant d'une encre d'impression sur un substrat (3) du support de données ou sur une autre couche du support de données ou est incorporée dans une couche, en particulier la couche de polymère plastique, du support de données.

10. Procédé pour l'écriture d'un support de données (9) avec une caractéristique d'authenticité magnétisable (5) prévue dans le support de données, laquelle peut être personnalisée par irradiation avec un faisceau de haute énergie, en changeant les propriétés physiques et / ou chimiques, pour un support de données selon l'une quelconque des revendications 4 ou 5, **caractérisé par** les étapes de la génération d'une information magnétique par chauffage local des aimants moléculaires pour produire un effet SCO et de l'effacement de l'information magnétique par refroidissement des aimants moléculaires pour produire un effet inverse SCO.
